# EUROPÄISCHE PATENTSCHRIFT

(11) **EP 0 974 003 B1**
(45) Veröffentlichungstag und Bekanntmachung des Hinweises auf die Patenterteilung: **23.01.2002**
(21) Anmeldenummer: 98922663.4
(22) Anmeldetag: 08.04.1998
(51) Int. Cl.: F02F 1/42

(54) **MEHRZYLINDER-VIERTAKT-BRENNKRAFTMASCHINE**
MULTICYLINDER FOUR-STROKE INTERNAL COMBUSTION ENGINE
MOTEUR A COMBUSTION INTERNE A QUATRE TEMPS A CYLINDRES MULTIPLES

(30) Priorität: 09.04.1997 AT 60897
(43) Veröffentlichungstag der Anmeldung: 26.01.2000
(73) Patentinhaber: DEUTZ Aktiengesellschaft, 51063 Köln (DE)
(72) Erfinder: BREITENBERGER, Manfred, A-8042 Graz (AT)
(86) Internationale Anmeldenummer: EP9802033
(87) Internationale Veröffentlichungsnummer: WO9845591

(56) Entgegenhaltungen:
- WO-A-86/05237
- US-A- 1 416 977
- US-A- 3 331 359
- US-A- 4 369 627
- US-A- 5 429 086

## Beschreibung

Die Erfindung betrifft eine Mehrzylinder-Viertakt-Brennkraftmaschine, die einen Zylinderkopf mit Einlaßkanälen und Auslaßkanälen für zwei Einlaß- und zwei Auslaßventile pro Zylinder aufweist, wobei als Einlaßkanäle pro Zylinder ein Drallkanal und ein Füllkanal zu den Einlaßventilen vorgesehen sind und wobei die Auslaßknäle direkt in eine Flanschfläche auf einer Motorlängsseite münden.

Eine derartige Brennkraftmaschine ist aus der US 5,429,086 bekannt. Diese Brennkraftmaschine ist mit einem Querstrom-Zylinderkopf versehen, bei dem die Auslaßkanäle auf einer ersten Motorlängsseite und die Einlaßkanäle auf der gegenüberliegenden Motorlängsseite münden. Soweit wie möglich, sind jeweils zwei Einlaßkanäle zu Einlaßventilen benachbarter Zylinder zusammengeführt. Der in Motorlängsrichtung gesehen erste und letzte Einlaßkanal ist jeweils als Einzelkanäle zu der Motorlängsseite geführt. Insgesamt ist durch den sich hieraus ergebenden sehr unterschiedlichen Einlaßkanalverlauf entlang der Brennkraftmaschine ein hoher Herstellungsaufwand gegeben. Zudem sind durch die unterschiedlich geformten Einlaßkanäle die Strömungsbedingungen zu den einzelnen Einlaßventilen verschieden.

Aufgabe der Erfindung ist es, diese Nachteile zu vermeiden und bei einer Brennkraftmaschine der genannten Art möglichst einfach herzustellende, einlaßströmungsoptimale Einlaßkanäle vorzuschlagen.

Erfindungsgemäß wird dies dadurch erreicht, daß die Einlaßventile einerseits und die Auslaßventile andererseits auf jeweils gegenüberliegenden Motorlängsseiten - bezogen zur Kurbelwellenachse - angeordnet sind und daß die Einlaßkanäle vier Teilkanäle und einen geodätisch darüber angeordneten Hauptkanal aufweisen, wobei der Hauptkanal auf einer Motorlängsseite mündet und die Teilkanäle von dem Hauptkanal ausgehend als Drallkanäle und Füllkanäle zu den Einlaßventilen benachbarter Zylinder geführt sind. Durch diese Ausgestaltung werden die zum Stand der Technik beschriebenen Nachteile vermieden. Der Hauptkanal und die Auslaßkanäle können dabei in Flanschflächen gegenüberliegender Motorlängsseiten münden. Vorteilhafter ist allerdings, wenn der Hauptkanal und die Auslaßkanäle in Flanschflächen einer Motorlängsseite münden. In dieser Ausgestaltung ist der Zylinderkopf von der Ausbildung her ein Gleichstromkopf, von der Funktion her aber ein Querstromkopf. Der auf der gegenüberliegenden Motorlängsseite zur Verfügung stehende Freiraum kann beispielsweise zur Unterbringung von Zusatzaggregaten verwendet werden. Der dadurch gewonnene konstruktive Freiraum im Zylinderkopf kann dabei bestens bei gleichzeitig gutem Einlaßströmungsverhalten ausgenützt werden. Zur Durchführung von Wartungsarbeiten am Ventiltrieb müssen die Einlaßströmungswege nicht mehr freigelegt werden, so daß bei diesen Arbeiten keine Verschmutzungs- oder Beschädigungsgefahr der Einlaßkanäle besteht. Vorzugsweise ist vorgesehen, daß die Teilkanäle in den Zylinderkopf eingelassen sind und der Hauptkanal im wesentlichen in ein am Zylinderkopf befestigtes Kipphebelgehäuse eingelassen ist.

Die konstruktive Gestaltung der Einlaßkanäle und deren Verlauf einerseits im Kipphebelgehäuse und andererseits im Zylinderkopf kommt den gußtechnischen Anforderungen bei der Herstellung entgegen.

Weiters ist es für die Fertigung und Montage vorteilhaft, wenn die durch das Kipphebelgehäuse gebildete Einlaßflanschfläche und die durch den Zylinderkopf gebildete Auslaßflanschfläche etwa parallel zur Motorlängsebene ausgebildet sind.

Die Einlaßflanschfläche liegt dabei oberhalb, die Auslaßflanschfläche unterhalb der Trennebene zwischen Zylinderkopf und Kipphebelgehäuse. Die Einspritzdüse liegt bevorzugt in der Zylindermitte.

Eine strömungsgünstige und platzsparende Form der Einlaßkanäle läßt sich weiters dadurch erreichen, daß die Teilkanäle zu den Ventilen eines ersten Zylinders und die Teilkanäle zu den Ventilen eines zweiten Zylinder jeweils symmetrisch zueinander ausgebildet sind und daß der Hauptkanal im wesentlichen quer zu den Mündungen der Teilkanäle und quer zu der Motorlängsachse im Bereich zwischen zwei Zylindern angeordnet ist.

Vorzugsweise ist vorgesehen, daß die Hauptkanäle etwa normal zur Motorlängsebene ausgebildet sind. Die Hauptkanäle im Kurbelgehäuse verlaufen dabei im wesentlichen quer zur Motorlängsebene, die Teilkanäle im Zylinderkopf dagegen im wesentlichen in Richtung der Ventilachsen.

In einer besonders bevorzugten Ausführungsform der Erfindung ist vorgesehen, daß die Teilkanäle von einem im Bereich der Trennebene zwischen Zylinderkopf und Kipphebelgehäuse angeordneten Sammelraum des Hauptkanales ausgehen.

Das Kipphebelgehäuse ist vorzugsweise als Druckgußteil ausgeführt.

Die Erfindung wird anhand der Figuren näher erläutert.

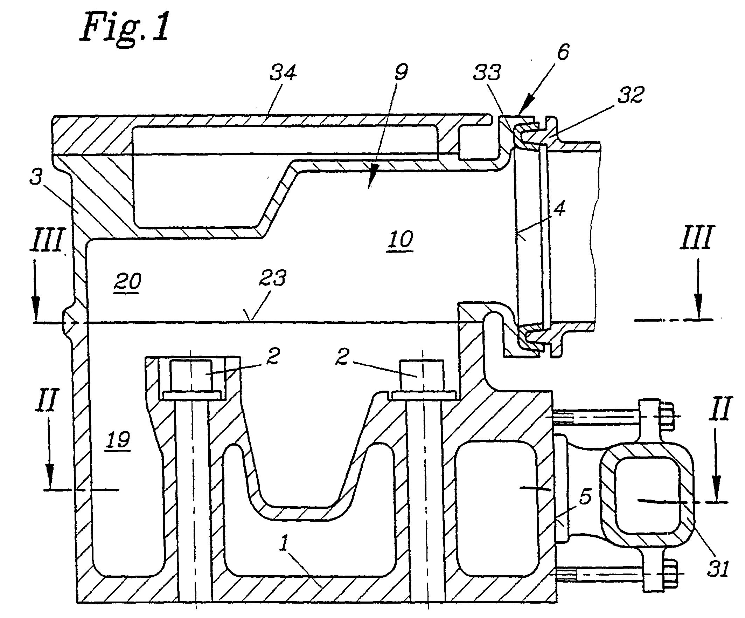

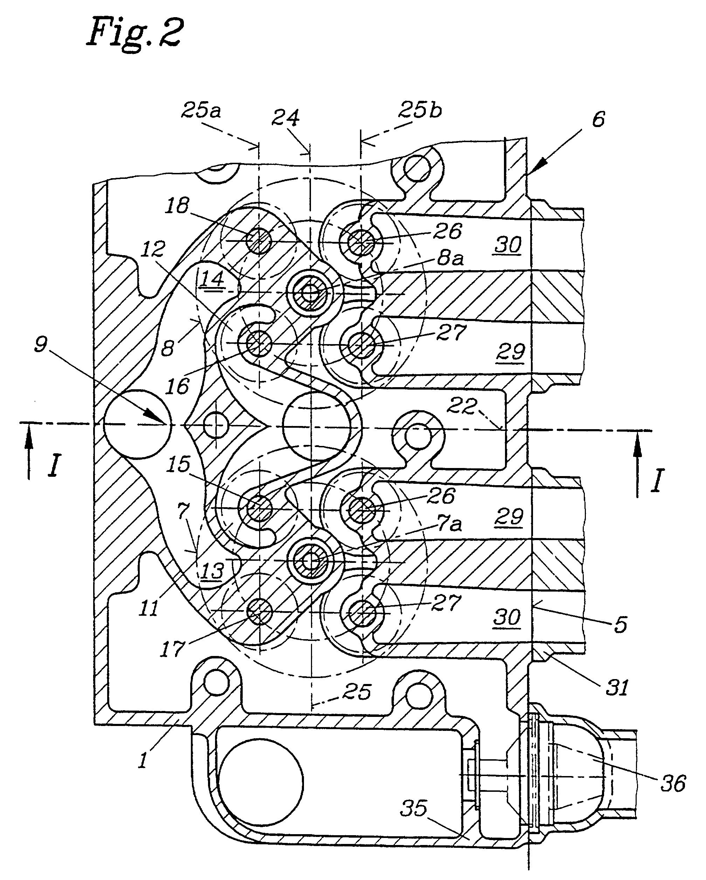

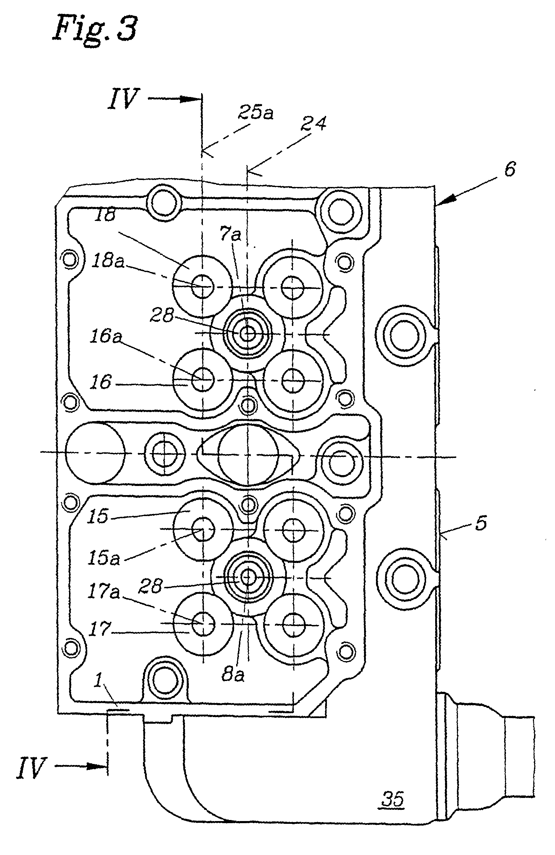

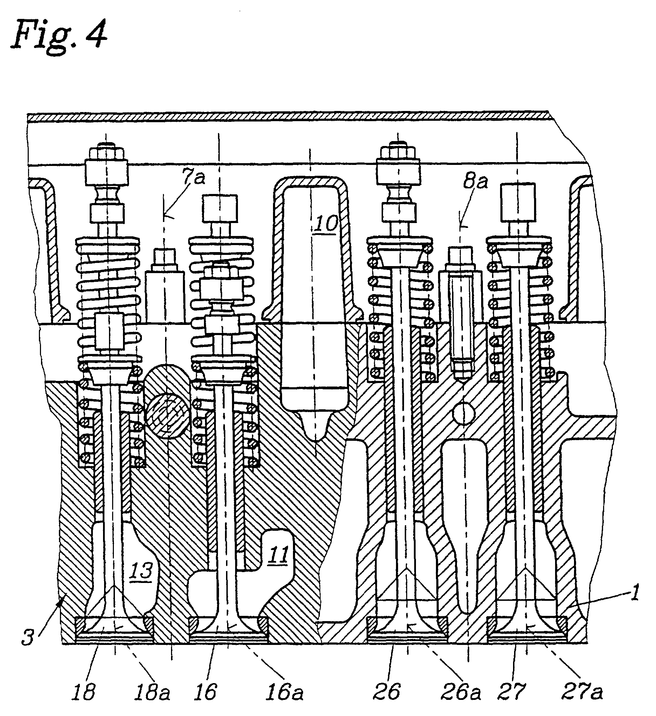

Es zeigen Fig. 1 einen Zylinderkopf samt Kipphebelgehäuse gemäß der Erfindung im Querschnitt nach der Linie I-I in Fig. 2, Fig. 2 einen Längsschnitt durch den Zylinderkopf gemäß der Linie II-II in Fig. 1, Fig. 3 eine Draufsicht auf den Zylinderkopf gemäß der Linie III-III in Fig. 1, und Fig. 4 einen Schnitt gemäß der Linie IV-IV in Fig. 3.

Der Zylinderkopf 1, der durch Zylinderkopfschrauben 2 am nicht weiter dargestellten Zylinderblock befestigt ist, sowie das am Zylinderkopf 1 angeschraubte Kipphebelgehäuse 3 sind so gestaltet, daß sich die Einlaßflanschfläche 4 und die Auslaßflanschfläche 5 auf der selben Motorlängsseite 6 befinden. Für jeweils zwei benachbarte Zylinder 7, 8 besteht der Einlaßkanal 9 jeweils aus einem zum Teil vom Kipphebelgehäuse 3 gebildeten Hauptkanal 10 und vier Teilkanälen 11, 12, 13, 14, welche jeweils zu einem Einlaßventil 15, 16, 17, 18 der beiden Zylinder 7, 8 führen. Pro Zylinder 7, 8 ist jeweils ein Teilkanal 11, 12 als Drallkanal, und ein Teilkanal 13, 14 als Füllkanal ausgebildet.

Die Füllkanäle 13, 14 gehen von einem gemeinsamen Querschnittsbereich 19 eines durch den Hauptkanal 10 gebildeten Sammelraumes 20 aus. Die Einlaßkanäle 9 zweier benachbarter Zylinder 7, 8 sind jeweils symmetrisch zu einer Normalebene 22 auf die Kurbelwellenachse 24 zwischen den beiden Zylinder 7, 8 angeordnet.

Der Sammelraum 20, sowie der Hauptkanal 10 befinden sich in der Trennebene 23 zwischen dem Kipphebelgehäuse 3 und dem Zylinderkopf 1. Dies ermöglicht es, das Kipphebelgehäuse 3 als Druckgußteil herzustellen.

Die Ventilachsen 15a, 16a, 17a, 18a der Einlaßventile 15, 16, 17, 18 liegen in einer Längsebene 25a, die parallel zur durch die Kurbelwellenachse 24 und die Zylinderachsen 7a und 8a aufgespannten Motorlängsebene 25 ist. Auch die Achsen 26a, 27a der Auslaßventile 26, 27 sind in einer zur Motorlängsebene 25 parallelen Längsebene 25b angeordnet. Die Auslaßkanäle 29, 30 sind jeweils zwischen den Auslaßventilen 26, 27 und der Auslaßflanschfläche 5 möglichst kurz ausgebildet. Mit 28 ist der Düsenhalter einer zentral angeordneten Einspritzdüse bezeichnet.

An die Auslaßflanschfläche 5 schließt der am Zylinderkopf 1 befestigte Auslaßkrümmer 31 an. An der Einlaßflanschfläche 4 des Kipphebelgehäuses 3 ist der Einlaßsammler 32 befestigt. Mit 33 ist eine zwischen Einlaßsammler 32 und Kipphebelgehäuse 3 vorgesehene Dichtung bezeichnet.

An der Oberseite des Kipphebelgehäuses 3 ist der Kipphebelgehäusedeckel 34 lösbar befestigt. Zur Durchführung von Wartungs- und Einstellarbeiten am Ventiltrieb der Einlaßventile 15, 16, 17, 18 und Auslaßventile 26, 27, kann der Kipphebelgehäusedeckel 34 entfernt werden.

Mit Bezugszeichen 35 ist in den Fig.2 und 3 ein stirnseitig am Zylinderkopf 1 angegossene Thermostatgehäuse für ein Kühlwasserthermostat 36 bezeichnet.

## Patentansprüche

1. Mehrzylinder-Viertakt-Brennkraftmaschine, die einen Zylinderkopf (1) mit Einlaßkanälen (9) und Auslaßkanälen (29, 30) für zwei Einlaß- und zwei Auslaßventile (26, 27) pro Zylinder aufweist, wobei als Einlaßkanäle pro Zylinder (7, 8) ein Drallkanal (11, 12) und ein Füllkanal (13, 14) zu den Einlaßventilen (15, 16, 17, 18) vorgesehen sind, und wobei die Auslaßkanäle (29, 30) direkt in eine Flanschfläche (5) auf einer Motorlängsseite (6) münden,
**dadurch gekennzeichnet, daß** die Einlaßventile (15, 16, 17, 18) einerseits und die Auslaßventile (26, 27) andererseits auf jeweils gegenüberliegenden Motorlängsseiten - bezogen zur Kurbeiwellenachse - angeordnet sind und daß die Einlaßkanäle (9) vier Teilkanäle (11, 12, 13, 14) und einen geodätisch darüber angeordneten Hauptkanal (10) aufweisen, wobei der Hauptkanal (10) auf einer Motorlängsseite mündet und die Teilkanäle (11, 12, 13, 14) von dem Hauptkanal (10) ausgehend als Drallkanäle (11, 12) und Füllkanäle (13, 14) zu den Einlaßventilen (15, 16, 17, 18) benachbarter Zylinder (7, 8) geführt sind.

2. Brennkraftmaschine nach Anspruch 1,
**dadurch gekennzeichnet, daß** der Hauptkanal (10) und die Auslaßkanäle (29, 30) in Flanschflächen (4, 5) einer Motorlängsseite (6) münden.

3. Brennkraftmaschine nach Anspruch 1,
**dadurch gekennzeichnet, daß** der Hauptkanal (10) und die Auslaßkanäle (29, 30) in Flanschflächen gegenüberliegender Motorlängsseiten münden.

4. Brennkraftmaschine nach einem der Ansprüche 1 bis 3,
**dadurch gekennzeichnet, daß** die Teilkanäle (11, 12, 13, 14) in den Zylinderkopf (1) eingelassen sind und der Hauptkanal (10) im wesentlichen in ein am Zylinderkopf (1) befestigtes Kipphebelgehäuse (3) eingelassen ist.

5. Brennkraftmaschine nach einem der Ansprüche 1 bis 4,
**dadurch gekennzeichnet, daß** die Teilkanäle (11, 13) zu den Ventilen (15, 17) eines ersten Zylinders (7) und die Teilkanäle (13, 14) zu den Ventilen (16, 18) eines zweiten Zylinder (8) jeweils symmetrisch zueinander ausgebildet sind und daß der Hauptkanal (10) im wesentlichen quer zu den Mündungen der Teilkanäle (11, 12, 13, 14) und quer zu der Motorlängsachse im Bereich zwischen zwei Zylindern (7, 8) angeordnet ist.

6. Brennkraftmaschine mit direkter Einspritzung nach einem der Ansprüche 1 bis 5,
**dadurch gekennzeichnet, daß** eine Einspritzdüse (28) mittig im Zylinder (7, 8) angeordnet ist.

7. Brennkraftmaschine nach einem der Ansprüche 1 bis 6,
**dadurch gekennzeichnet, daß** die durch das Kipphebelgehäuse (3) gebildete Einlaßflanschfläche (4) und die durch den Zylinderkopf (1) gebildete Auslaßflanschfläche (5) etwa parallel zur Motorlängsebene (25) ausgebildet sind.

8. Brennkraftmaschine nach einem der Ansprüche 1 bis 7,
**dadurch gekennzeichnet, daß** die Hauptkanäle (10) vorwiegend etwa normal zur Motorlängsebene (25) ausgebildet sind.

9. Brennkraftmaschine nach einem der Ansprüche 1 bis 8,
**dadurch gekennzeichnet, daß** die Teilkanäle (11, 12, 13, 14) von einem im Bereich der Trennebene (23) zwischen Zylinderkopf (1) und Kipphebelgehäuse (3) angeordneten Sammelraum (20) des Hauptkanales (10) ausgehen.

10. Brennkraftmaschine nach einem der Ansprüche 1 bis 9,
**dadurch gekennzeichnet, daß** das Kipphebelgehäuse (3) als Druckgußteil ausgeführt ist.

## Claims

1. Multiple cylinder four-stroke internal combustion engine having a cylinder head (1) with inlet passageways (9) and exhaust passageways (29, 30) for two inlet valves and two exhaust valves (26, 27) per cylinder, whereby as inlet passageways, one helical passageway (11, 12) and one tangential passageway (13, 14) are provided to the inlet valves (15, 16, 17, 18) per cylinder (7, 8), and whereby the exhaust passageways (29, 30) open directly into a flange facing (5) on a longitudinal side (6) of the engine, **characterised in that** the inlet valves (15, 16, 17, 18) on the one hand, and the exhaust valves (26, 27) on the other hand are arranged on opposed longitudinal sides of the engine - relative to the crankshaft axis - and that the inlet passageways (9) have four partial passageways (11, 12, 13, 14) and one main passageway (10) arranged geodetically above them, whereby the main passageway (10) opens on a longitudinal side of the engine and the partial passageways (11, 12, 13, 14) run from the main passageway (10) as helical passageways (11, 12) and tangential passageways (13, 14) to the inlet valves (15, 16, 17, 18) of adjacent cylinders (7, 8).

2. Internal combustion engine according to Claim 1, **characterised in that** the main passageway (10) and the exhaust passageways (29, 30) open into flange facings (4, 5) of a longitudinal side of the engine (6).

3. Internal combustion engine according to Claim 1, **characterised in that** the main passageway (10) and the exhaust passageways (29, 30) open into flange facings of opposed longitudinal sides of the engine.

4. Internal combustion engine according to one of the claims 1 to 3, **characterised in that** the partial passageways (11, 12, 13, 14) are set into the cylinder head (1) and the main passageway (10) is substantially set into a rocker arm housing (3) attached to the cylinder head (1).

5. Internal combustion engine according to one of the claims 1 to 4, **characterised in that** the partial passageways (11, 13) to the valves (15, 17) of a first cylinder (7) and the partial passageways (13, 14) to the valves (16, 18) of a second cylinder (8) are formed respectively symmetrically to each other and that the main passageway (10) is arranged substantially transverse to the openings of the partial passageways (11, 12, 13, 14) and transverse to the longitudinal axis of the engine in the region between two cylinders (7, 8).

6. Internal combustion engine with direct injection according to one of the claims 1 to 5, **characterised in that** an injection nozzle (28) is arranged centrally in the cylinder (7, 8).

7. Internal combustion engine according to one of the claims 1 to 6, **characterised in that** the inlet flange facing (4) formed by the rocker arm housing (3) and the exhaust flange facing (5) formed by the cylinder head (1) are designed approximately parallel to the engine longitudinal plane (25).

8. Internal combustion engine according to one of the claims 1 to 7, **characterised in that** the main passageways (10) are substantially designed approximately normal to the longitudinal plane (25) of the engine.

9. Internal combustion engine according to one of the claims 1 to 8, **characterised in that** the partial passageways (11, 12, 13, 14) originate from a collecting chamber (20) of the main passageway (10) arranged in the region of the separation plane (23) between cylinder head (1) and rocker arm housing (3).

10. Internal combustion engine according to one of the claims 1 to 9, **characterised in that** the rocker arm housing (3) is designed as diecast member.

## Revendications

1. Moteur à combustion interne à quatre temps à plusieurs cylindres comportant une culasse (1) avec des canaux d'admission (9) et des canaux d'échappement (29, 30) pour deux soupapes d'admission et deux soupapes d'échappement (26, 27) par cylindre, les canaux d'admission par cylindre (7, 8) étant constitués par un canal de turbulence (11, 12) et un canal de remplissage (13, 14) pour les soupapes d'admission (15, 16, 17, 18) et les canaux d'échappement (29, 30) débouchant directement dans une surface à bride (50) du côté longitudinal (6) du moteur,
**caractérisé en ce que**
d'une part les soupapes d'admission (15, 16, 17, 18) et d'autre part les soupapes d'échappement (26, 27) sont sur des côtés longitudinaux respectifs opposés (par rapport à l'axe du vilebrequin) et
les canaux d'admission (9) ont quatre canaux partiels (11, 12, 13, 14) et un canal principal (10) situé géodésiquement au-dessus de ceux-ci, le canal principal (10) débouchant sur un côté longitudinal du moteur et les canaux partiels (11, 12, 13, 14) partant du canal principal (10) sont réalisés sous forme de canaux de turbulence (11, 12) et de canaux de remplissage (13, 14) vers les soupapes d'admission (15, 16, 17, 18) des cylindres voisins (7, 8).

2. Moteur à combustion interne selon la revendication 1,
**caractérisé en ce que**
le canal principal (10) et les canaux d'échappement (29, 30) débouchent dans des surfaces formant des brides (4, 5) d'un côté longitudinal (6) du moteur.

3. Moteur à combustion interne selon la revendication 1,
**caractérisé en ce que**
le canal principal (10) et les canaux d'échappement (29, 30) débouchent dans des surfaces de bride sur des côtés longitudinaux opposés du moteur.

4. Moteur à combustion interne selon l'une quelconque des revendications 1 à 3,
**caractérisé en ce que**
les canaux partiels (11, 12, 13, 14) sont intégrés dans la culasse (1) et le canal principal (10) est intégré au moins dans un carter des culbuteurs (3) fixé à la culasse (1).

5. Moteur à combustion interne selon l'une quelconque des revendications 1 à 4,
**caractérisé en ce que**
les canaux partiels (11, 13) sont réalisés symétriquement par rapport aux soupapes (15, 17) d'un premier cylindre (7) et les canaux partiels (13, 14) par rapport aux soupapes (16, 18) d'un second cylindre (8) et,
le canal principal (10) est essentiellement transversal par rapport aux embouchures des canaux partiels (11, 12, 13, 14) et transversal par rapport à l'axe longitudinal du moteur dans la zone comprise entre deux cylindres (7, 8).

6. Moteur à combustion interne à injection directe selon l'une quelconque des revendications 1 à 5,
**caractérisé en ce qu'**
un injecteur (28) est prévu au milieu du cylindre (7, 8).

7. Moteur à combustion interne selon l'une quelconque des revendications 1 à 6,
**caractérisé en ce que**
la surface de bride d'admission (4) formée par le carter à culbuteurs (3) et la surface de bride d'échappement (5) formée par la culasse (1) sont sensiblement parallèles au plan longitudinal (25) du moteur.

8. Moteur à combustion interne selon l'une quelconque des revendications 1 à 7,
**caractérisé en ce que**
les canaux principaux (10) sont principalement dirigés sensiblement dans la direction normale au plan longitudinal (25) du moteur.

9. Moteur à combustion interne selon l'une quelconque des revendications 1 à 8,
**caractérisé en ce que**
les canaux partiels (11, 12, 13, 14) partent d'une chambre collectrice (20) du canal principal (10) prévu dans la zone du plan de séparation (23) entre la culasse (1) et le carter des culbuteurs (3).

10. Moteur à combustion interne selon l'une quelconque des revendications 1 à 9,
**caractérisé en ce que**
le carter des culbuteurs (3) est une pièce de fonte sous pression.
